# EUROPEAN PATENT SPECIFICATION

(11) **EP 3 394 786 B1**
(45) Date of publication and mention of the grant of the patent: **09.10.2019**
(21) Application number: 16825768.1
(22) Date of filing: 22.12.2016
(51) Int. Cl.: G06F 21/53, G06F 21/56

(54) **SOFTWARE SECURITY**
SOFTWARESICHERHEIT
SÉCURITÉ DE LOGICIEL

(30) Priority: 24.12.2015 WO PCT/EP2015/202731
(43) Date of publication of application: 31.10.2018
(73) Proprietor: British Telecommunications public limited company, London EC1A 7AJ (GB)
(72) Inventor: EL-MOUSSA, Fadi, London EC4V 5BT (GB)
(74) Representative: British Telecommunications public limited company Intellectual Property Department
(86) International application number: PCT/EP2016/082477
(87) International publication number: WO 2017/109129

(56) References cited:
- US-A1- 2005 108 562
- US-B1- 8 713 631

## Description

The present invention relates to software security. In particular it relates to identifying malicious code executing in a runtime software environment.

Software for execution in a computer system is increasingly deployed to runtime environments such as runtime engines or system software environments for the execution of program code. Runtime environments can be employed to provide a hardware abstraction, application portability, to offer common and/or centralised services such as operating system and service interfaces, resource management, application programming interfaces, security and the like. An example of a popular runtime environment is the Java runtime environment provided by Oracle Corp.

Software for execution in a runtime environment can come from an unknown and/or untrusted source, such as Java applets accessed via web pages. To preserve the security of a runtime environment and the computer system on which the runtime environment executes, such software can be executed in a mode of the runtime environment in which security restrictions and/or controls are in place. For example, in the Java runtime environment a Java applet originating outside a computer system will execute in a restricted operating mode of a Java runtime environment known as a "sandbox". A strict security policy applies to software executing within the sandbox an enforced by security services of the runtime environment. Where an application is able to escape the confines of the sandbox then a computer system's resources and data are at risk of misappropriation or misuse. This challenge is particularly acute for software originating from an unknown and/or untrusted source.

US patent 8 713 631 B1 discloses a system and method for detecting malicious code executed by virtual machine.

US patent application 2005/108562 A1 discloses techniques for detecting executable malicious code using a combination of static and dynamic analyses.

Accordingly it would be beneficial to address the aforementioned security challenges in software runtime environments.

The present invention accordingly provides, in a first aspect, a computer implemented method of detecting malicious code in a software application executing with a runtime environment in a computer system, the method comprising: receiving a definition of one or more runtime exception trigger conditions, each trigger condition defining criteria for the runtime environment to enter a software exception state and having associated a definition of a resulting state of the runtime environment having entered the exception state; monitoring the runtime environment to detect the satisfaction of a detected trigger condition by the runtime environment and, in response to a determination that the runtime environment fails to enter a resulting state associated with the detected trigger condition, identifying the software application as including malicious code.

Thus, in use at a runtime of the software application the runtime environment is monitored for the identification of a state of operation of the runtime environment in which an exception is triggered as determined with reference to the exception trigger conditions. Where an exception trigger condition indicates such a state of operation the environment is monitored to determine whether a resulting state of operation is entered. Where the method determines that the runtime environment fails to enter the resulting state then malicious code is detected since this failure indicates that the operation of an exception triggering and handling process has been modified to exploit the runtime environment Accordingly embodiments of the invention are suitable for identifying malicious code in a software application and upon such identification protective and/or remedial measures can be adopted and/or the identification, nature, structure and/or content of the application can be recorded, flagged and shared within and outside the computer system to aid detection and intervention for the malicious code in future. A benefit of embodiments of the present invention is that both the identification of triggering conditions/resulting states and monitoring of the runtime environment in execution are extrinsic to the runtime environment and are therefore relatively protected from exploitation by malicious code itself. The parsing and recording steps could be achieved outside the reach of an application executing in the runtime environment. The approach is also particularly suited to identifying day zero attacks based on a frequently exploited category of code relating to exception dispatch and handling.

Preferably one or more exception trigger conditions include a Boolean condition.

Preferably one or more definitions of a resulting state include an identification of an exception dispatched by the runtime environment.

Preferably one or more definitions of a resulting state include an identification of a function executed by the runtime environment.

Preferably the application is received via a computer network.

Preferably the method further comprises, in response to the identification that the software application includes malicious code, terminating execution of the software application.

Preferably the method further comprises, in response to the identification that the software application includes malicious code, generating an indication of the malicious code.

The present invention accordingly provides, in a second aspect, a computer system to detect malicious code in a software application executing with a runtime environment comprising a processor and a data store, wherein the processor is adapted to undertake the steps of: receiving a definition of one or more runtime exception trigger conditions, each trigger condition defining criteria for the runtime environment to enter a software exception state and having associated a definition of a resulting state of the runtime environment having entered the exception state; monitoring the runtime environment to detect the satisfaction of a detected trigger condition by the runtime environment and, in response to a determination that the runtime environment fails to enter a resulting state associated with the detected trigger condition, identifying the software application as including malicious code.

The present invention accordingly provides, in a third aspect, a computer system including a software runtime environment for executing a software application, the computer system comprising: a data store storing a definition of one or more runtime exception trigger conditions, each trigger condition defining criteria for the runtime environment to enter a software exception state and having associated a definition of a resulting state of the runtime environment having entered the exception state, and a processor executing computer program code to monitor the runtime environment in execution to detect the satisfaction of a detected trigger condition by the runtime environment and, in response to a determination that the runtime environment fails to enter a resulting state associated with the detected trigger condition, identifying the software application as including malicious code.

The present invention accordingly provides, in a fourth aspect, a computer program element comprising computer program code to, when loaded into a computer system and executed thereon, cause the computer to perform the steps of a method as described above.

A preferred embodiment of the present invention will now be described, by way of example only, with reference to the accompanying drawings, in which:
Figure 1 is a block diagram of a computer system suitable for the operation of embodiments of the present invention;
Figure 2 is a component diagram of a data store of a computer system configured to detect malicious code in a software application in accordance with embodiments of the present invention;
Figure 3 is a flowchart of a method of detecting malicious code in a software application executing with a runtime environment in a computer system in accordance with embodiments of the present invention;
Figure 4 is a component diagram of a condition generator for generating runtime exception trigger conditions in accordance with embodiments of the present invention;
Figure 5 is a flowchart of a method of the condition generator of Figure 4 in accordance with embodiments of the present invention;
Figure 6 is a depiction of a subset of exemplary runtime environment code in accordance with embodiments of the present invention;
Figure 7 is an illustrative component diagram of an arrangement in accordance with an exemplary embodiment of the present invention; and
Figure 8 is an illustrative flow diagram of the exemplary arrangement of Figure 7 in use.

Embodiments of the present invention address challenges identifying malicious code in a software application executing within a runtime environment of a computer system. A sandbox is a controlled portion of a runtime environment for permitting the execution of software applications while restricting one or more of resource, data, service, facility, interface and/or other features of a computer system and/or runtime environment in order to protect the computing system. Thus a sandbox is intended to protect resources and data of a computer system executing a runtime environment. Protection is required against, for example, software applications from untrusted or unknown sources that may seek to attack or exploit the computer system. While a sandbox is intended to restrict the privileges of an executing application, an ability to elevate or change security privileges based on defined security policies is available within a sandbox. For example, a runtime environment can provide an escalated privilege level for authorised applications executing within a sandbox such that otherwise protected resources are accessible to such authorised software. In some environments it is possible to remove the constraints of a sandbox altogether for authorised software applications. Mechanisms therefore exist for privilege escalation of authorised software which introduces an inherent weakness in the sandbox model if malicious software could enjoy such escalated privilege.

Malicious software may seek to compromise the effectiveness of the sandbox by exploiting weaknesses in the sandbox implementation. In particular, forcing a sandbox implementation to enter an exception or error state can present many vulnerabilities. Error or exception states in software are difficult to test exhaustively during development and the numerous logic-routes to, and consequences of, an error or exception state can be difficult to predict. Error or exception states usually invoke exception handling logic involving the execution of code paths rarely traversed during normal operation. This is especially true where such error or exception states arise due to a contrived unusual and/or unforeseen state of operation of the sandbox. A simple example is the omission of arguments for API calls causing null-pointer exceptions handled by exception handlers. The security of such exception handlers may be sub-standard or not exhaustively considered/tested and therefore presents potentially numerous new vulnerabilities for malicious software to exploit.

As remedial and protective measures may be implemented in exception handling routines, malicious software can go further to attempt to exploiting vulnerabilities to prevent or preclude error or exception detection and handling. For example, internal method calls to verification and validation methods may be coded-out of inline execution so bypassing error handling logic. Alternatively, arguments for such methods may be modified or removed to prevent error or exception handling and potentially permit access by malicious code to protected resources.

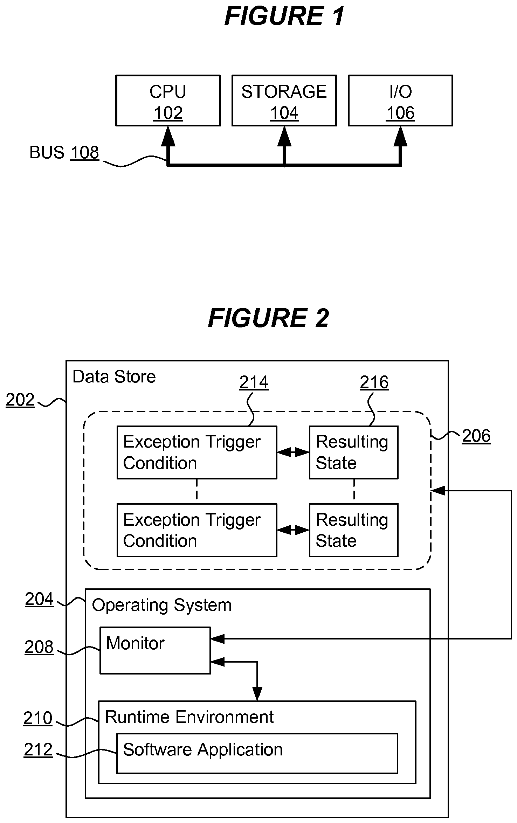

Figure 1 is a block diagram of a computer system suitable for the operation of components in embodiments of the present invention. A computer system such as is illustrated in Figure 1 can be a physical or virtualised computing environment comprising one or more of hardware, software and/or firmware such as a physical personal, micro, mini or mainframe computer system, a network of connected computer systems, a virtualised computer system and the like. Notably, mobile and pervasive devices such as smartphones, tablet computers, navigation aids, mobile terminals, sensors and the like also constitute computer systems. A central processor unit (CPU) 102 is communicatively connected to storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a data store 202 of a computer system configured to detect malicious code in a software application 212 in accordance with embodiments of the present invention. The data store 202 is a storage 104 of a computer system and stores data and instructions for execution by one or more physical or virtual CPUs 102. Notably, the data store 202 may be an aggregate, distributed or consolidated storage mechanism or otherwise arranged or configured from multiple physical or virtual data storage devices. The data store 202 stores an operating system 204 of the computer system providing operating system services, facilities and functions including, for example, file handling, directory services, user services, authentication services, security policies, user interfaces, network services, application programming interfaces, memory management and the like as will be apparent to those skilled in the relevant art.

Executing with the operating system 204 is a runtime environment 210 as a software environment for the execution of software applications such as application 212. In one example the runtime environment 210 is an application container environment for the execution of software applications. In an alternative example the runtime environment 210 is a virtual machine execution environment providing virtual storage resources and one or more virtual processors for the execution of application code. Preferably the runtime environment 210 includes libraries, classes, functions or services supporting the execution of software applications and providing facilities to applications for their execution. Thus the runtime environment 210 may provide application programming interfaces (APIs) for file handling, inter alia: network communication; memory management; data structure instantiation and handling; standard functions such as mathematical functions, string handling, data type handling, data conversion, frequently used routines and the like; error handling; garbage collection; compilation and/or interpretation; just-in-time compilation; synchronisation; native interfaces; and the like. In such embodiments the runtime environment 210 can constitute all or part of an intermediate

The runtime environment 210 receives and executes software code for an application 212. The application 212 is provided in a form that can be executed by the runtime environment 210 such as a binary or object code representation. In some embodiments the application 212 is provided as an intermediate code representation for interpretation or subsequent compilation, such intermediate representation corresponding to a conversion or compilation of source code to a portable, platform neutral or common intermediate format for subsequent interpretation or compilation for a native hardware or software environment. For example, such an intermediate representation can be a bytecode representation. The application 212 could conceivably be provided in a source code or pre-processed source code form that requires processing such as interpretation, conversion or translation prior to execution by the runtime environment 210 and the runtime environment 210 may include or have associated a relevant processing mechanism for effecting such processing.

Preferably the application 212 originates from an unknown or untrusted source such as a website or internet server. Accordingly, in preferred embodiments of the present invention the runtime environment 210 operates a mode of execution for the application 212 that restricts the application 212 from access to one or more resources, services, interfaces, facilities, subroutines, functions, classes, methods and/or the like in accordance with, for example, a security policy such as by executing the application 212 in a sandbox environment.

In one embodiment the runtime environment 210 is the Java Runtime Environment (JRE) provided by Oracle Corp and the software application 212 is a Java applet such as may be referenced and/or provided via a web-page over a network such as the internet.

A monitor 208 software component also operates with the operating system 204. The monitor 208 is a software component for monitoring one or more of the execution state and/or data state of the runtime environment 210 at a runtime of the software application 212. For example, the monitor 208 is configured to monitor which code such as functions, methods, subroutines and/or interfaces are called, executed or invoked in the runtime environment 210, such code being potentially code of the runtime environment 210 itself, libraries of the runtime environment 210 or code of the software application 212. Further, the monitor 208 can be configured to access data of the runtime environment 210 such as, inter alia: data structure arrangement and contents; variables; arguments; state information; the contents of data stores associated with the runtime environment 210; execution data structures such as stacks, heaps or the like; debugging information such; and the like. For example, in embodiments where the runtime environment 210 is a JRE, the monitor 208 can be a tool, function or suite employing or working with the Java Virtual Machine Tool Interface (JVM TI) as a native programming interface for inspecting and controlling the state of a JRE and application executing with the JRE. Notably the Monitor 208 is a trusted software component executing in a trusted mode of operation such that its access to the state information of the runtime environment 210 is permitted. Accordingly the monitor 208 is most preferably secured by a security means such as a firewall, operating system task or process separation or other suitable security means.

The data store 202 further includes a set of one or more data items 206 storing exception trigger conditions 214 and associated resulting states 216. An exception trigger condition 214 is a condition defining a state of execution of the runtime environment 210 that will cause the triggering of an exception. Hereinafter the term exception shall be used to refer to any exception, error, fault or abnormal state indication occurring within an executing software program. An exception is triggered if it is occasioned by a state of the runtime environment 210 satisfying an exception trigger condition 214. Once triggered, an exception will manifest in some way depending on the operation of the runtime environment 210. For example, in a JRE exceptions are managed using a "throw"/"catch" model of exception generation and handling whereby a software routine detecting an error state can "throw" a defined exception which may be "caught" by a defined "catch" block in a call stack. Thus error states can be communicated within an execution call stack by passing exception data structures using the "throw"/"catch" mechanism, with code in the call stack being able to catch exceptions for handling or propagation back through routines in a call stack. Java exceptions are all subclasses of the Java class "Throwable" that includes a stack trace. Thus, in a Java embodiment, the exceptions are first generated and then thrown, and the throwing of an exception can be said to be "dispatching" the exception. In other embodiments, the detection of an error state is a trigger of an exception, the creation of an indication, reference, message or other data item in respect of a triggered exception can be considered to be the generation of an exception, and the communication of the exception can be considered to be the dispatching of an exception.

Exceptions are generated in response to a detection of a trigger state of operation such as an error or fault state. Accordingly exceptions are associated with a state of operation that may relate to a particular function call, a particular data item, a particular argument or similar. Exceptions therefore have associated a condition such as a Boolean condition for determining the existence or otherwise of a trigger state for generating and dispatching an exception. At least a subset of these trigger conditions are stored in the data store 202 as exception trigger conditions 214.

Following the triggering of an exception the behaviour, actions, processing or other response of the runtime environment 210 puts the runtime environment 210 into a new state resulting from the dispatch of the exception. This new state is herein referred to as a resulting state 216 that results from the dispatch of an exception. For example, a resulting state 216 can be, inter alia: the generation and dispatch of a further exception; the invocation and execution of a particular subroutine, function or method; the storage of a particular data item or value; the generation of a particular output, display or similar; and the like. A resulting state 216 is stored in the data store in association with an exception trigger condition 214 relating to an exception, the dispatch of which leads to the resulting state 216.

In use at a runtime of a software application 212 in the runtime environment 210 the monitor 208 monitors the runtime environment 210 for the identification of a state of operation of the runtime environment 210 in which an exception is triggered as determined with reference to the exception trigger conditions 214 of the data items 206. Where an exception trigger condition 214 indicates such a state of operation of the runtime environment 210 the monitor 208 further monitors the runtime environment 210 to determine if the environment 210 enters a new state of operation according to a resulting state 216 corresponding to the exception trigger condition 214. In normal operation, the runtime environment 210 in an exception state will transition to a corresponding resulting state 216 at some point in time following the exception state. Where the monitor 208 detects the resulting state 216 then the operation of the runtime environment 210 (and, accordingly, the application 212) is determined to be acceptable and execution continues. However, where the monitor 208 fails to detect the runtime environment 210 entering the corresponding resulting state 216 then the operation of the exception triggering, generation and dispatching process has been modified to exploit the runtime environment 210 and the software application 212 can be identified as including malicious code. Accordingly, a monitor 208 in accordance with embodiments of the present invention is suitable for identifying malicious code in a software application 212. Upon such identification of malicious code protective and/or remedial measures can be adopted and/or the identification, nature, structure and/or content of the application 212 can be recorded, flagged and shared within and outside the computer system to aid detection and intervention for the malicious code in future.

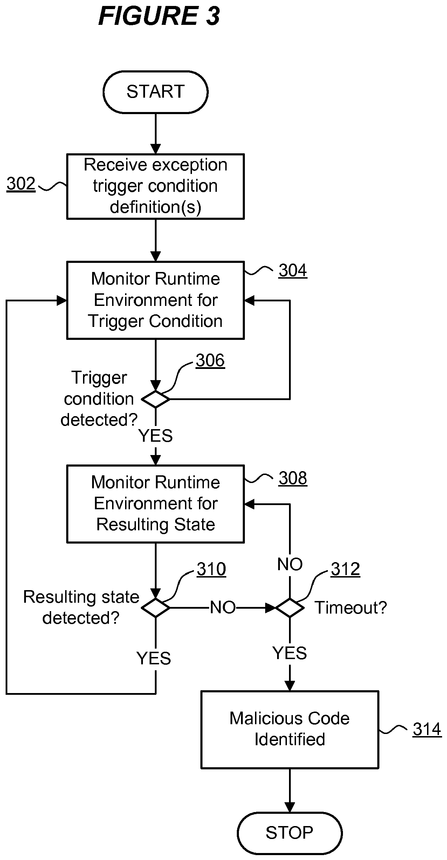

Figure 3 is a flowchart of a method of detecting malicious code in a software application 212 executing with a runtime environment 210 in a computer system in accordance with embodiments of the present invention. Initially, at step 302, the method receives a definition of one or more runtime exception trigger conditions 214 each defining criteria for the runtime environment 210 to enter a software exception state. Associated with each trigger condition 214 is a definition of a resulting state 216 of the runtime environment. Subsequently, at step 304, the monitor 208 monitors to execution of the runtime environment 304 to identify satisfaction of an exception trigger condition 214 to indicate a state of operation of the runtime environment 210 that triggers an exception. Where an exception state is detected at step 306 the method further monitors, at step 308, the runtime environment 210 for a resulting state 216 corresponding to the exception trigger condition 214. If the resulting state 216 is detected at step 310 the method returns to monitoring at step 304. If the runtime environment 210 fails to enter a state corresponding to the resulting state 216 the method continues to monitor at steps 312 and 308 for a predetermined time period. Where the predetermined time period has passed ("timeout") then the method concludes the identification of malicious code in the application 212 at step 314.

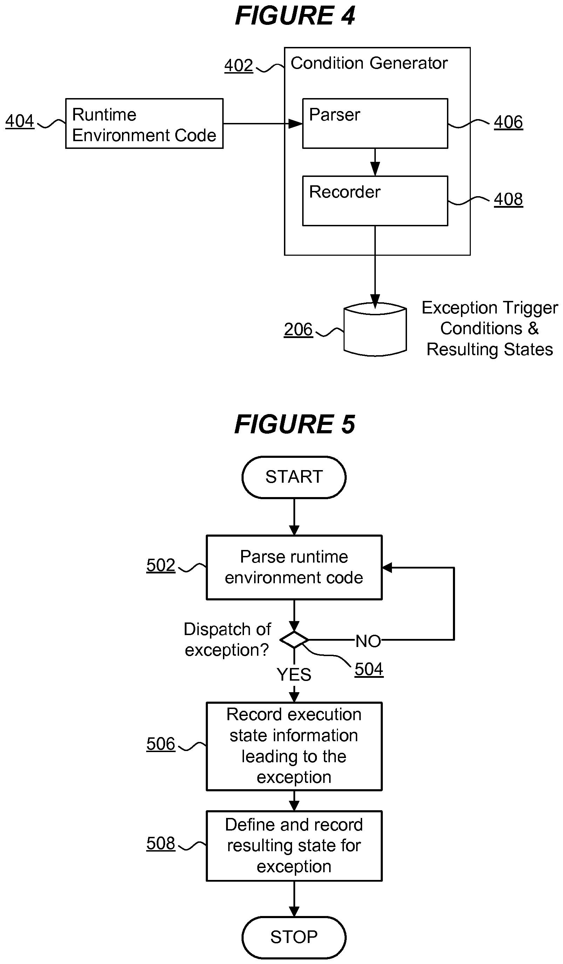

Figure 4 is a component diagram of a condition generator 402 for generating runtime exception trigger conditions 214 in accordance with embodiments of the present invention. The condition generator 402 is a hardware, software, firmware or combination component operating in association with, or contained within, the data store 202 of Figure 2. The condition generator 402 is configured to parse, via a parser component 406, code 404 for the runtime environment 210 to identify one or more conditions, the satisfaction of which lead to the triggering of an exception in the runtime environment 210. The condition generator 402 further identifies resulting states 216 corresponding to each of the identified conditions 214. The condition generator 402 subsequently records, via the recorder component 408, exception trigger conditions 214 and corresponding resulting states 216 for subsequent use by the monitor 208 of Figure 2.

Figure 5 is a flowchart of a method of the condition generator of Figure 4 in accordance with embodiments of the present invention. Initially, at step 502, the parser 406 parses runtime environment code 404. The runtime environment code 404 may be in a source code form, a debug-binary or debug-object code form (in which references to a source code form are provided), an intermediate code form (such as bytecode or the like), or an object code form. The parsing of the runtime environment code 404 identifies occurrences of exception dispatch such as the throwing of an exception in a Java runtime environment. Where an exception dispatch is detected at step 504 the method identifies and records execution state information leading to the exception at state 506 as an exception trigger condition 214. The exception trigger condition 214 defines the conditions in which the exception is triggered and thus can be constituted as a Boolean condition based on features of the runtime environment 210 such as variable values, data item contents, function calls, method invocations and the like. Subsequently, at step 508, the method identifies a resulting state 216 corresponding to the exception trigger condition 214 as a state of operation of the runtime environment 210 following the trigger of the exception. The identification of a resulting state 216 may involve waiting for a period to identify any new exceptions thrown, error indications or identifiers generated and/or communicated, the execution of particular functions, methods or subroutines and the like. The identified resulting state 216 is also recorded at step 508.

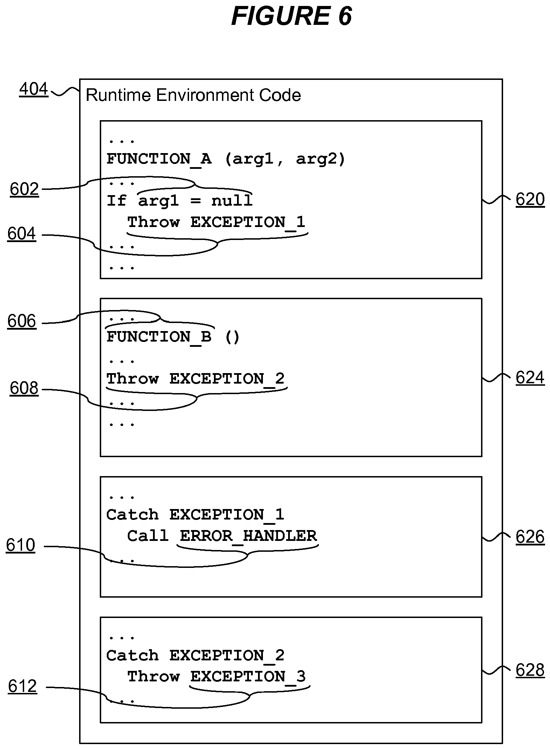

The arrangement of Figure 4 and the method of Figure 5 will now be considered with reference to an exemplary subset of runtime environment code 404. Figure 6 is a depiction of a subset of exemplary runtime environment code 404 in accordance with embodiments of the present invention. The runtime environment code 404 includes four separate code blocks 620, 624, 626 and 628 that may or may not be within the same module, class, function, procedure routine or library. A first code block 620 includes a function FUNCTION_A receiving two parameters arg1 and arg2. FUNCTION A includes a test of a condition 602 based on arg1 the result of which can trigger the dispatch of a new exception EXCEPTION_1 at 604. Second code block 624 includes a function FUNCTION_B at 606 that triggers the dispatch of a new exception EXCEPTION_2 at 608. Code block 626 us configured to catch EXCEPTION_1 and in response to catching EXCEPTION_1 calls a function ERROR_HANDLER at 610. Code block 628 is configured to catch EXCEPTION 2 and in response to catching EXCEPTION_2 throws a further exception EXCEPTION_3 at 612.

Considering now the method of Figure 5 for the exemplary runtime environment code 404 of Figure 6. Initially at step 502 the method parses the runtime environment code 404 identifies the dispatch of an exception EXCEPTION_1 at 604 in the function FUNCTION_A and a corresponding catch of EXCEPTION_1 in code block 626. At step 506 the method identifies the condition "arg1 = null" at 602 as an exception trigger condition 214 and records this to a data store. This condition is readily identified since it directly leads to the generation of the exception at 604. At step 508 the method identifies the function call to function ERROR_HANDLER at 610 as a resulting state 216 corresponding to the exception trigger condition 214 for EXCEPTOIN_1 and records this to the data store.

The method of Figure 5 further identifies, by parsing at step 502, the dispatch of an exception EXCEPTION_2 at 608 in the function FUNCTION_B and a corresponding catch of EXCEPTION_2 in code block 628. At step 506 the method identifies the execution of FUNCTION_B as directly leading to the trigger of EXCEPTION_2 and accordingly identifies a condition of the execution of FUNCTION_B as an exception trigger condition 214 and records this to the data store. At step 508 the method identifies the dispatch of a further exception EXCEPTION_3 at 612 as a resulting state 216 corresponding to the exception trigger condition 214 for EXCEPTION_2 and records this to the data store.

Thus it can be seen that the exemplary method of the condition generator 402 is suitable for identifying exception trigger conditions 214 and corresponding resulting states 216 for defining the data items 206 of Figure 2. In a preferred embodiment the method of Figure 5 of the condition generator 402 is used to parse substantially all code for a runtime environment 210 though a subset of the code may be sufficient. In this way the conditions for triggering and dispatching exceptions by the runtime environment 210 are defined extrinsic to the runtime environment 210 itself such that any modification of, misuse of, tampering with or manipulation of the runtime environment 210 can be detected extrinsic to the environment based on an analysis of the environment beforehand.

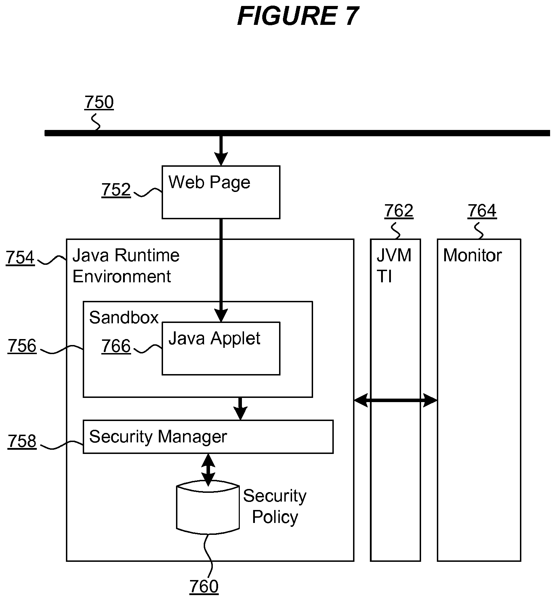

The operation of an exemplary embodiment of the invention will now be considered in detail. Figure 7 is an illustrative component diagram of an arrangement in accordance with an exemplary embodiment of the present invention. A network 750 such as a wired, wireless communication means provides a web page 752 for receipt by a computer system executing a JRE 754. The JRE 754 includes a logical sandbox 756 for the execution of a java applet 766 received and/or referred to by the web page 752. The applet 766 is thus untrusted and/or from an unknown source and its operation is restricted to the functions, facilities and resources made available to it via the sandbox 756. Restrictions can include restrictions on access to a file system of the computer system, restrictions on access to network facilities, restrictions on access to libraries and the like.

The JRE 754 includes a security manager 758 for providing security facilities for the JRE 754. For example, the security manager 758 performs a permission check for actions requested by the applet 766 to determine if the actions are permitted by a security policy 760 applicable for the applet 766 in the sandbox 756. The arrangement further includes a monitor 764 substantially as hereinbefore described and implemented to access state information of the JRE 754 via a Java Virtual Machine Tools Interface 762.

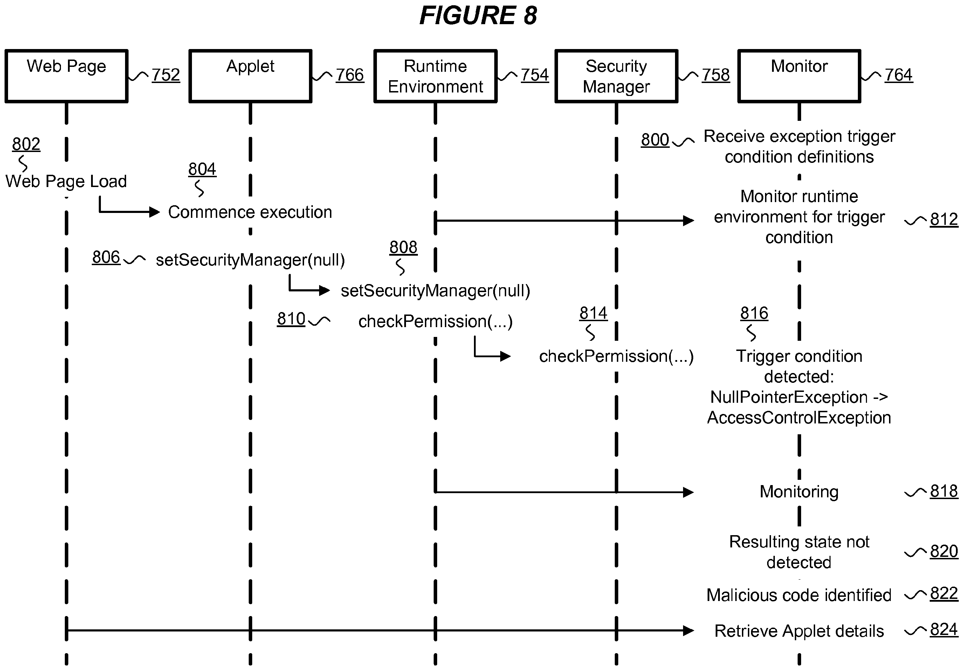

In the exemplary arrangement of Figure 7 the applet 766 includes malicious code for elevating the security privileges of the applet in the sandbox 766 by calling a setSecurityManager method of the JRE 754 with a null argument. Such a method call would result in the elevation of security privileges by replacing the security manager 758 with a new security manager implementing a more liberal security policy 760 except that such an outcome is prevented by the JRE due to the null argument. The null argument is detected by the JRE 754 resulting in an exception such as a NullPointerException which itself results in a Java.Security.AccessControlException. However, in the exemplary arrangement of Figure 7 the applet 766 is further configured to exploit a weakness in the JRE 754, the security manager 758, an operating system of the computer system or any other aspect of the computer system to modify the operation of the JRE 754 to prevent the throwing of a NullPointerException. The exact nature of the exploit and weakness are not relevant here except that they may include a day-zero vulnerability being a vulnerability as yet unknown to the developers of the runtime environment and therefore representing a security exposure. In the arrangement of Figure 7 the monitor 764 has access to a definition of an exception trigger condition 214 identifying that a call to the setSecurityManager method with a null argument is a condition for triggering an exception. Further, the exception trigger condition 214 has associated a resulting state 216 identifying the dispatch of a Java.Security.AccessControlException as a result of the triggered exception. The operation of the monitor 764 in accordance with an embodiment of the present invention to detect the exploitation of the JRE 754 will now be described with reference to Figure 8.

Figure 8 is an illustrative flow diagram of the exemplary arrangement of Figure 7 in use. Initially, at step 800, the monitor 764 receives exception trigger condition 214 definitions including corresponding resulting states 216 as defined above. At step 812 the monitor 764 commences monitoring of the JRE 754 via the JVM TI for the identification of an exception trigger condition.

At step 802, the web page 752 is loaded and applet 766 is instantiated in the JRE 754 for commencement of execution at 804 in the sandbox 756. At step 806 the applet 766 calls setSecurityManager with a NULL argument. At step 808 the JRE 754 invokes the setSecurityManager method with a NULL argument which results in a checkPermission method call. The checkPermission method call includes arguments for checking if the applet 766 has the required privileges to change the security manager to a new security manager identified by a NULL argument. At step 814 the security manager 758 executes the checkPermission method which, due to the NULL argument, would normally result in a NullPointerException. In the exemplary embodiment of Figure 8 no such NullPointerException is generated because the JRE 754 has been exploited by the applet previously and the NullPointerException has been prevented by the exploit.

However, at step 816 the monitor 756, monitoring the JRE 754 via the JVM TI, identifies that an exception trigger condition 214 has been satisfied: the setSecurityManager call with a NULL argument is expected to trigger a NullPointerException with the resulting state of the dispatching of a Java.Security.AccessControlException. Accordingly, the monitor 764 continues to monitor the JRE 754 at step 818 for a predetermined time period to detect the resulting state 216 (i.e. the throwing of a Java.Security.AccessControlException). At step 820 the monitor 764 concludes its monitoring with a determination that the resulting state 216 was not detected (no Java.Security.AccessControlException was thrown) and accordingly at step 822 the monitor 764 identifies that the applet 766 includes malicious code. Optionally, at step 824, the monitor 764 retrieves details of the applet 766 with reference to the originating web page 752. In other embodiments the applet 766 can be isolated, terminated, further monitored or otherwise processed for the purpose of intrusion detection, prevention and/or remediation.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of detecting malicious code in a software application (212) executing with a runtime environment (210) in a computer system, the method comprising:
receiving a definition of one or more runtime exception trigger conditions (214), each trigger condition defining criteria for the runtime environment to enter a software exception state and having associated a definition of a resulting state (216) of the runtime environment having entered the exception state;
monitoring the runtime environment to detect the satisfaction of a detected trigger condition by the runtime environment and, in response to a determination that the runtime environment fails to enter a resulting state associated with the detected trigger condition, identifying the software application as including malicious code.

2. The method of claim 1 wherein one or more exception trigger conditions include a Boolean condition.

3. The method of any preceding claim wherein one or more definitions of a resulting state include an identification of an exception dispatched by the runtime environment.

4. The method of any preceding claim wherein one or more definitions of a resulting state include an identification of a function executed by the runtime environment.

5. The method of any preceding claim wherein the application is received via a computer network.

6. The method of any preceding claim further comprising, in response to the identification that the software application includes malicious code, terminating execution of the software application.

7. The method of any preceding claim further comprising, in response to the identification that the software application includes malicious code, generating an indication of the malicious code.

8. A computer system to detect malicious code in a software application (212) executing with a runtime environment (210) comprising a processor and a data store, wherein the processor is adapted to undertake the steps of:
receiving a definition of one or more runtime exception trigger conditions (214), each trigger condition defining criteria for the runtime environment to enter a software exception state and having associated a definition of a resulting state (216) of the runtime environment having entered the exception state;
monitoring the runtime environment to detect the satisfaction of a detected trigger condition by the runtime environment and, in response to a determination that the runtime environment fails to enter a resulting state associated with the detected trigger condition, identifying the software application as including malicious code.

9. A computer system including a software runtime environment for executing a software application, the computer system comprising:
a data store storing a definition of one or more runtime exception trigger conditions, each trigger condition defining criteria for the runtime environment to enter a software exception state and having associated a definition of a resulting state of the runtime environment having entered the exception state, and
a processor executing computer program code to monitor the runtime environment in execution to detect the satisfaction of a detected trigger condition by the runtime environment and, in response to a determination that the runtime environment fails to enter a resulting state associated with the detected trigger condition, identifying the software application as including malicious code.

10. A computer program element comprising computer program code to, when loaded into a computer system and executed thereon, cause the computer to perform the steps of a method as claimed in any of claims 1 to 7.

## Patentansprüche

1. Computerimplementiertes Verfahren zum Erkennen von bösartigem Code in einer Softwareanwendung (212), die mit einer Laufzeitumgebung (210) in einem Computersystem ausgeführt wird, wobei das Verfahren umfasst:
Empfangen einer Definition einer oder mehrerer Laufzeit-Ausnahmeauslösebedingungen (214), wobei jede Auslösebedingung Kriterien für die Laufzeitumgebung definiert, sodass diese in einen Softwareausnahmezustand tritt, und eine zugehörige Definition eines resultierenden Zustands (216) der Laufzeitumgebung aufweist, die in den Ausnahmezustand getreten ist;
Überwachen der Laufzeitumgebung, um die Erfüllung einer erkannten Auslösebedingung durch die Laufzeitumgebung zu erkennen und, als Reaktion auf eine Ermittlung, dass die Laufzeitumgebung versagt, in einen zur erkannten Auslösebedingung gehörigen, resultierenden Zustand zu treten, Identifizieren der Softwareanwendung als bösartigen Code enthaltend.

2. Verfahren nach Anspruch 1, wobei eine oder mehrere Ausnahmeauslösebedingungen eine boolesche Bedingung enthalten.

3. Verfahren nach einem der vorangehenden Ansprüche, wobei eine oder mehrere Definitionen eines resultierenden Zustands eine Identifikation einer Ausnahme enthalten, die durch die Laufzeitumgebung abgegeben wird.

4. Verfahren nach einem der vorangehenden Ansprüche, wobei eine oder mehrere Definitionen eines resultierenden Zustands eine Identifikation einer Funktion enthalten, die von der Laufzeitumgebung ausgeführt wird.

5. Verfahren nach einem der vorangehenden Ansprüche, wobei die Anwendung über ein Computernetzwerk empfangen wird.

6. Verfahren nach einem der vorangehenden Ansprüche, ferner umfassend, als Reaktion auf die Identifikation, dass die Softwareanwendung bösartigen Code enthält, ein Beenden der Ausführung der Softwareanwendung.

7. Verfahren nach einem der vorangehenden Ansprüche, ferner umfassend, als Reaktion auf die Identifikation, dass die Softwareanwendung bösartigen Code enthält, ein Generieren eines Hinweises auf den bösartigen Code.

8. Computersystem zum Erkennen von bösartigem Code in einer Softwareanwendung (212), die mit einer Laufzeitumgebung (210) ausgeführt wird, umfassend einen Prozessor und einen Datenspeicher, wobei der Prozessor ausgelegt ist, die Schritte durchzuführen zum:
Empfangen einer Definition einer oder mehrerer Laufzeit-Ausnahmeauslösebedingungen (214), wobei jede Auslösebedingung Kriterien für die Laufzeitumgebung definiert, sodass diese in einen Softwareausnahmezustand tritt, und eine zugehörige Definition eines resultierenden Zustands (216) der Laufzeitumgebung aufweist, die in den Ausnahmezustand getreten ist;
Überwachen der Laufzeitumgebung, um die Erfüllung einer erkannten Auslösebedingung durch die Laufzeitumgebung zu erkennen und, als Reaktion auf eine Ermittlung, dass die Laufzeitumgebung versagt, in einen zur erkannten Auslösebedingung gehörigen, resultierenden Zustand zu treten, Identifizieren der Softwareanwendung als bösartigen Code enthaltend.

9. Computersystem, das eine Softwarelaufzeitumgebung zum Ausführen einer Softwareanwendung enthält, wobei das Computersystem umfasst:
einen Datenspeicher, der eine Definition einer oder mehrerer Laufzeit-Ausnahmeauslösebedingungen speichert, wobei jede Auslösebedingung Kriterien für die Laufzeitumgebung definiert, sodass diese in einen Softwareausnahmezustand tritt, und eine zugehörige Definition eines resultierenden Zustands der Laufzeitumgebung aufweist, die in den Ausnahmezustand getreten ist, und
einen Prozessor, der Computerprogrammcode ausführt, um die Laufzeitumgebung bei ihrer Ausführung zu überwachen, um die Erfüllung einer erkannten Auslösebedingung durch die Laufzeitumgebung zu erkennen und, als Reaktion auf eine Ermittlung, dass die Laufzeitumgebung versagt, in einen zur erkannten Auslösebedingung gehörigen, resultierenden Zustand zu treten, Identifizieren der Softwareanwendung als bösartigen Code enthaltend.

10. Computerprogrammelement, das Computerprogrammcode umfasst, um, wenn es in ein Computersystem geladen wird und darauf ausgeführt wird, den Computer zu veranlassen, die Schritte eines Verfahrens nach einem der Ansprüche 1 bis 7 durchzuführen.

## Revendications

1. Procédé mis en oeuvre par ordinateur permettant de détecter un code malveillant dans une application logicielle (212) s'exécutant avec un environnement d'exécution (210) dans un système informatique, le procédé comprenant les étapes suivantes :
recevoir une définition d'une ou plusieurs conditions de déclenchement d'exceptions d'exécution (214), chaque condition de déclenchement définissant des critères d'entrée de l'environnement d'exécution dans un état d'exception logicielle et comportant une définition associée d'un état résultant (216) de l'entrée de l'environnement d'exécution dans l'état d'exception ;
contrôler l'environnement d'exécution pour détecter la satisfaction d'une condition de déclenchement détectée par l'environnement d'exécution et, en réponse à une détermination que l'environnement d'exécution n'entre pas dans un état résultant associé à la condition de déclenchement détectée, identifier l'application logicielle comme comportant un code malveillant.

2. Procédé selon la revendication 1, dans lequel une ou plusieurs conditions de déclenchement d'exceptions comprennent une condition booléenne.

3. Procédé selon l'une quelconque des revendications précédentes, dans lequel une ou plusieurs définitions d'un état résultant comprennent une identification d'une exception envoyée par l'environnement d'exécution.

4. Procédé selon l'une quelconque des revendications précédentes, dans lequel une ou plusieurs définitions d'un état résultant comprennent une identification d'une fonction exécutée par l'environnement d'exécution.

5. Procédé selon l'une quelconque des revendications précédentes, dans lequel l'application est reçue par le biais d'un réseau informatique.

6. Procédé selon l'une quelconque des revendications précédentes comprenant en outre, en réponse à l'identification que l'application logicielle comporte un code malveillant, terminer l'exécution de l'application logicielle.

7. Procédé selon l'une quelconque des revendications précédentes comprenant en outre, en réponse à l'identification que l'application logicielle comporte un code malveillant, générer une indication du code malveillant.

8. Système informatique permettant de détecter un code malveillant dans une application logicielle (212) s'exécutant avec un environnement d'exécution (210) comprenant un processeur et un magasin de données, le processeur étant conçu pour effectuer les étapes suivantes :
recevoir une définition d'une ou plusieurs conditions de déclenchement d'exceptions d'exécution (214), chaque condition de déclenchement définissant des critères d'entrée de l'environnement d'exécution dans un état d'exception logicielle et comportant une définition associée d'un état résultant (216) de l'entrée de l'environnement d'exécution dans l'état d'exception ;
contrôler l'environnement d'exécution pour détecter la satisfaction d'une condition de déclenchement détectée par l'environnement d'exécution et, en réponse à une détermination que l'environnement d'exécution n'entre pas dans un état résultant associé à la condition de déclenchement détectée, identifier l'application logicielle comme comportant un code malveillant.

9. Système informatique comportant un environnement d'exécution logicielle destiné à exécuter une application logicielle, le système informatique comprenant :
un magasin de données stockant une définition d'une ou plusieurs conditions de déclenchement d'exceptions d'exécution, chaque condition de déclenchement définissant des critères d'entrée de l'environnement d'exécution dans un état d'exception logicielle et comportant une définition associée d'un état résultant de l'entrée de l'environnement d'exécution dans l'état d'exception, et
un processeur exécutant un code de programme informatique permettant de contrôler l'environnement d'exécution pour détecter la satisfaction d'une condition de déclenchement détectée par l'environnement d'exécution et, en réponse à une détermination que l'environnement d'exécution n'entre pas dans un état résultant associé à la condition de déclenchement détectée, identifier l'application logicielle comme comportant un code malveillant.

10. Elément de programme informatique comprenant un code de programme informatique destiné à amener, lorsqu'il est chargé dans un système informatique et exécuté, l'ordinateur à mettre en oeuvre les étapes d'un procédé selon l'une quelconque des revendications 1 à 7.
